**Europäisches Patentamt**

**European Patent Office**

**Office européen des brevets**

(11) Veröffentlichungsnummer: **0 094 581**
**A1**

# EUROPÄISCHE PATENTANMELDUNG

(21) Anmeldenummer: 83104525.7

(22) Anmeldetag: 07.05.83

(51) Int. Cl.³: **G 02 B 23/12**
**G 02 B 23/16**

(30) Priorität: 17.05.82 CH 3064/82

(43) Veröffentlichungstag der Anmeldung:
23.11.83 · Patentblatt 83/47

(84) Benannte Vertragsstaaten:
DE FR GB NL

(71) Anmelder: WILD HEERBRUGG AG.

CH-9435 Heerbrugg(CH)

(72) Erfinder: Appius, Max
Blättlerstrasse 4
CH-9442 Berneck(CH)

(74) Vertreter: Punschke, Edgar et al,
c/o EGLI PATENTANWÄLTE Horneggstrasse 4
CH-8008 Zürich(CH)

(54) **Binokulares Nachtsichtgerät.**

(57) In einem binokularen Nachtsichtgerät mit mindestens einer Bildverstärkerröhre sind alle optischen Teile sowie alle Führungs- und/oder Verstellglieder (19, 20) innerhalb eines hermetisch abgeschlossenen Gehäuses (1, 4) angeordnet. Betätigungselemente für Führungs- oder Verstellglieder sind über gas- oder wasserdichte Verbindungen (22, 25) nach aussen geführt. Objektiv- und Okularöffnungen sind am Gehäuse mit hermetisch verschliessenden Objektiv- bzw. Okulardeckgläsern (8, 9, 10) abgedeckt. Linkes und rechtes Okulardeckglas (9, 10) weisen einen grösseren Durchmesser auf als die dahinter befindlichen Okulare, so dass innerhalb des Gehäuses (1) genügend Platz zur Verstellung des Okularabstandes entsprechend dem gewünschten Augenabstand bleibt. Durch die Okularverstellung innerhalb des geschlossenen Gehäusevolumens werden Pump- oder Staueffekte des eingeschlossenen Gases vermieden.

Fig.1

## Binokulares Nachtsichtgerät

Die Erfindung betrifft ein binokulares Nachtsichtgerät
mit mindestens einer Bildverstärkerröhre und mit
Mitteln zur Anpassung des Okularabstandes an den Augenabstand.

Bei binokularen Nachtsichtgeräten, seien es zweikanalige
Geräte mit zwei Bildverstärkerröhren oder binokulare
Geräte mit einer einzigen Bildverstärkerröhre, ist es
notwendig, den Okularabstand an unterschiedlichen Augenabstand für verschiedene Benutzer anzupassen. Zu diesem
Zweck war es bisher üblich, nach aussen hin offene
Führungs- bzw. Verstellelemente vorzusehen. Da Nachtsichtgeräte häufig in rauhem Betrieb und bei jeder·
Witterung eingesetzt werden, ergeben sich Schwierigkeiten im praktischen Betrieb, insbesondere Verschmutzungsgefahr, Eindringen von Wasser und Vereisungsgefahr im
Winter. Versuche zur Ueberwindung dieser Schwierigkeiten, die darin bestanden, die separat eingekapselten
Okulare gegeneinander beweglich zu halten, führten zu
Schwierigkeiten, im wesentlichen hervorgerufen durch die
Dämpfungswirkung eingeschlossener Luft- oder Gaspolster.

Es ist Aufgabe der vorliegenden Erfindung, ein binokulares
Nachtsichtgerät anzugeben, welches hermetisch gegen
äussere Einflüsse abgekapselt ist und welches trotzdem
von aussen zu betätigende Bedienungselemente, insbesondere
zur Anpassung des Okularabstandes an den Augenabstand
aufweist.

Diese Aufgabe wird erfindungsgemäss durch ein binokulares Nachtsichtgerät mit den im Patentanspruch 1 definierten Merkmalen gelöst.

Die Vorteile dieser Lösung bestehen insbesondere darin, dass die witterungsempfindlichen Bauteile, wie Verstelltrieb und Führungs- oder Steuerungselemente, im Innern des Gehäuses hermetisch abgeschlossen untergebracht sind und dass trotzdem eine leichte und einfache Verstellung von aussen möglich ist, ohne dass ein unerwünschter Pump- oder Staueffekt durch das eingeschlossene Schutzgas oder durch Luft auftritt. Durch diese Massnahmen ergibt sich ein äusserst robustes und zuverlässiges sowie einfach zu bedienendes Nachtsichtgerät.

Im folgenden wird ein bevorzugtes Ausführungsbeispiel der Erfindung anhand von Zeichnungen näher erläutert. Es zeigen:

Fig. 1    die Schnittdarstellung des beschriebenen Ausführungsbeispiels,

Fig. 2    den Schnitt II - II gemäss Fig. 1,

Fig. 3    die von rechts gesehene Seitenansicht der Ausführung gemäss Fig. 1 und

Fig. 4    die Schnittdarstellung des Batteriegehäuses für das beschriebene Ausführungsbeispiel.

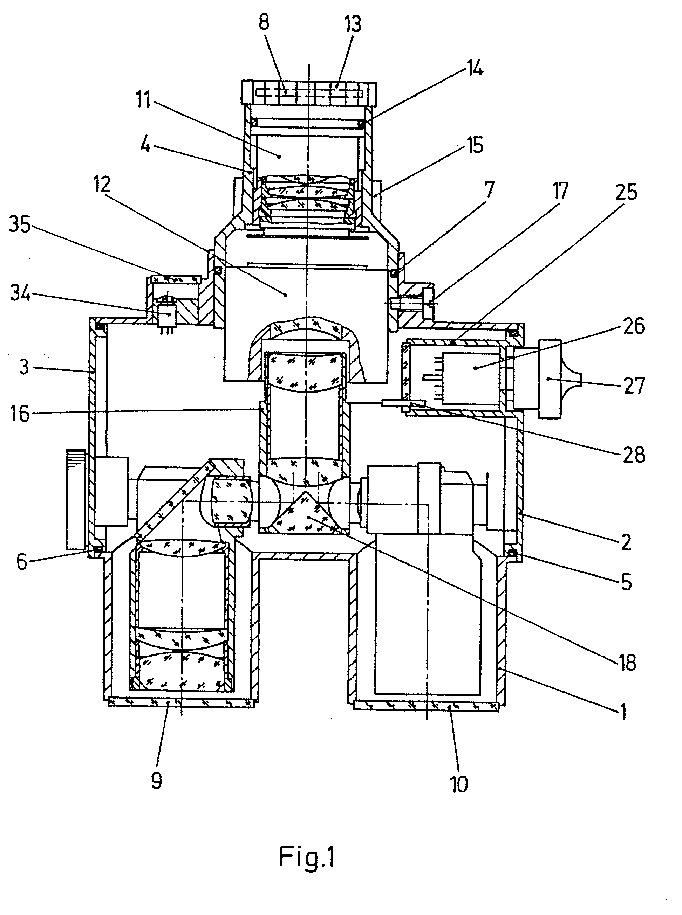

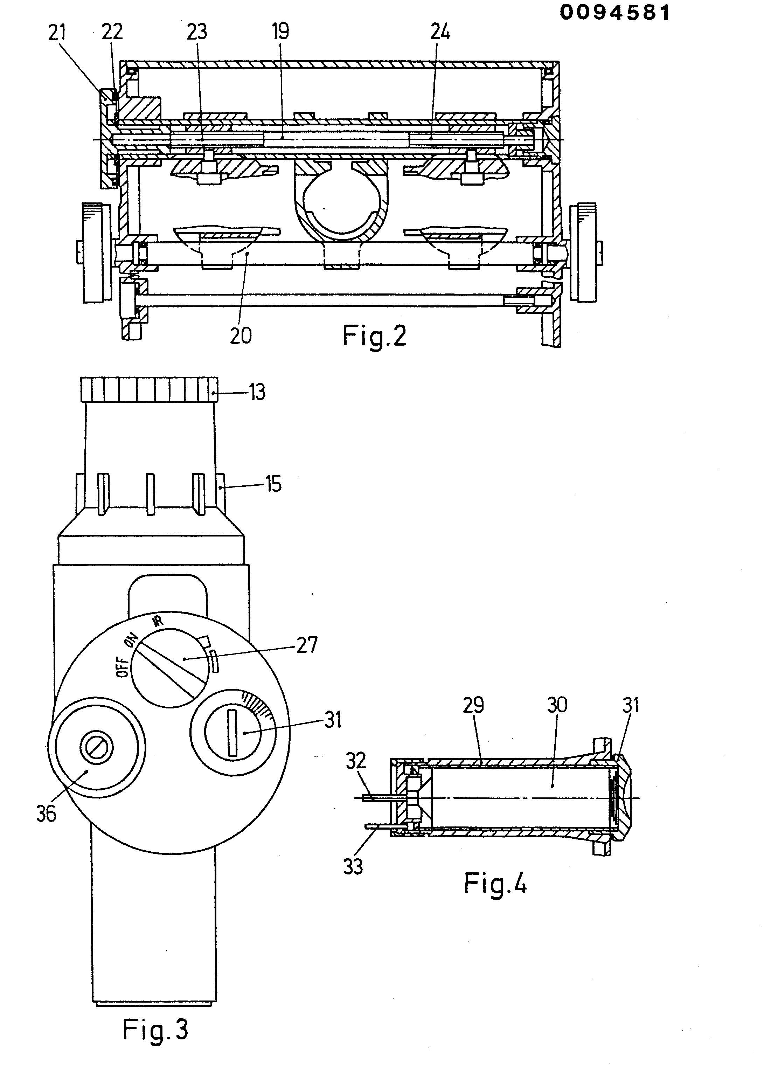

Gemäss Fig. 1 weist das als bevorzugtes Ausführungsbeispiel gezeigte Nachtsichtgerät ein Gehäusegrundteil 1 auf, welches auf einander gegenüberliegende Seiten durch ein erstes Deckelteil 2 und ein zweites Deckelteil 3
sowie durch ein Objektivgehäuseteil 4 zu einem geschlossenen Gehäuse ergänzt ist.  Im bevorzugten Beispiel
weist das Gehäusegrundteil 1 die Form eines Zylinders mit
der Achse A-A auf, wobei die Deckelteile 2 und 3 entgegengesetzte Stirnflächen dieses Zylinders bilden.  In
der Mantelfläche dieses Zylinders ist das ebenfalls
zylinderförmige Objektivgehäuseteil mit der Zylinderachse
D-D eingesetzt, während auf der entgegengesetzten Seite
des Zylinders um die Achse A-A zwei kleinere zylinderförmige Gehäuseteile mit den Zylinderachsen B-B zur Aufnahme des linken Okulars und mit der Zylinderachse C-C
zur Aufnahme des rechten Okulars eingesetzt sind.  Die
Achsen D-D, B-B und C-C liegen dabei parallel zueinander.
Der beschriebene Gehäuseaufbau ist noch einmal in der
Seitenansicht gemäss Fig. 3 verdeutlicht.

Für einen hermetischen Abschluss der beiden Deckelteile
und des Objektivgehäuseteils gegenüber dem Gehäusegrundteil sorgen eine erste Dichtung 5 am ersten Deckelteil 2,
eine zweite Dichtung 6 am zweiten Deckelteil 3 sowie eine
dritte Dichtung 7 am Objektivgehäuseteil 4.  Die Objektivöffnung am Objektivgehäuseteil 4 ist mit Hilfe eines
Objektivdeckglases 8 hermetisch verschlossen.  Das
Objektivdeckglas 8 bzw. die äussere Objektivlinse ist
beispielsweise mit dem Objektivgehäuseteil 4 verklebt oder
auf andere Weise gas- oder wasserdicht verbunden.  Auf
gleiche Weise sind die okularseitigen Enden des Gehäusegrundteils 1 mit einem linken Okulardeckglas 9 und einem
rechten Okulardeckglas 10 hermetisch verschlossen.  Auch
diese beiden Deckgläser sind vorzugsweise mit dem
Gehäusegrundteil 1 verklebt.

Das Objektivgehäuseteil 4 enthält ein Objektiv 11 zur Abbildung eines zu betrachtenden Gegenstandes auf die Photokathode eines ebenfalls im Objektivgehäuseteil 4 untergebrachten Bildwandlerteils 12.

Mit Hilfe eines Distanz-Einstellringes 13 lässt sich das Objektiv 11 auf die gewünschte Beobachtungsdistanz einstellen. Dabei wird das Objektiv 11 innerhalb des Objektivgehäuseteils 4 verdreht. Eine Objektivdichtung 14 schliesst das Objektiv gegenüber dem Objektivgehäuseteil 4 gas- und wasserdicht ab. Mit Hilfe eines am Objektivgehäuseteil 4 aussen angebrachten Einstellrändels 15 lässt sich das gesamte Objektivgehäuseteil gegenüber einem im Gehäusegrundteil 1 befestigten Optikteil 16 leicht verschieben, wodurch sich die Bildschärfeneinstellung zum Auge verändern lässt, welche früher als Dioptrieverstellung am Okular vorgenommen wurde. Die mögliche Verschiebung des Objektivgehäuseteils 4 gegenüber dem Gehäusegrundteil ist äusserst minimal und beträgt in der Praxis ein bis zwei Millimeter. Geführt wird die Hubbewegung mit Hilfe einer Führungsschraube 17, deren vorderes Stiftteil in eine entsprechende Kurvenführung innerhalb des Objektivgehäuseteils greift.

Vom Optikteil 16 führt der Strahlengang über ein Umlenkprisma 18 in das linke bzw. rechte Okularteil. Die beiden Okularteile, welche auf an sich bekannte Art aufgebaut sein können, sind gemäss Fig. 2 auf einer Verstellspindel 19 sowie an einer dazu parallelen Schienenführung 20 geführt. Sowohl die Verstellspindel 19 als auch die Schienenführung 20 sind vollständig im geschützten Innenraum des Gehäusegrundteils 1 angeordnet. Zur Betätigung der Verstellspindel 19 steht diese mit einem Drehknopf 21 in Verbindung, wobei Drehknopf und Spindel mit Hilfe
einer Spindeldichtung 22 gegenüber dem Innenraum des
Gehäusegrundteils 1 abgedichtet sind.

Die Verstellspindel 19 weist zur Verstellung der beiden
Okularteile einander gegenläufige Gewindebereiche 23
und 24 auf. Beispielsweise ist der Gewindebereich 23
für das linke Okular ein Linksgewinde, während der Gewindebereich 24 für das rechte Okular ein Rechtsgewinde
ist. Wie aus Fig. 1 ersichtlich, ist das Gehäusegrundteil 1 im Bereich der Okulare so breit ausgebildet, dass
eine normale Verstellmöglichkeit für das linke und rechte
Okular innerhalb des unbewegten Gehäusegrundteils 1 gewährleistet ist. Ueber die Okulardeckgläser 9 und 10,
welche die ganze Breite des Ausschnitts im Gehäusegrundteil 1 einnehmen, ist für jeden eingestellten Ausgenabstand die freie und vollständige Sicht durch die beiden
Okularteile gewährleistet. Die als Einblickstutzen
ausgebildeten Partien des Gehäusegrundteils 1 werden durch
die Okularverstellung mit Hilfe des Drehknopfes 21 nicht
beeinflusst. Durch die bei der Verstellung verlagerten
Bauteile innerhalb des geschlossenen Gehäusegrundteils 1 werden
praktisch keine Volumina geändert, so dass keinerlei
Innendruckdifferenzen auftreten. Vorzugsweise ist der
Drehknopf 21 ergonomisch günstig auf der rechten Gehäusestirnseite angeordnet.

Gemäss Fig. 1 ist innerhalb des ersten Deckelteils 2 ein
nach innen hermetisch abgeschlossenes Schaltergehäuse 25
eingelassen, welches zur Aufnahme eines elektrischen
Schalters 26 dient. Zur Betätigung des Schalters 26 ist
ein Knebel 27 nach aussen geführt. Vom Innenraum des
Schaltergehäuses 25 führen Kontaktstifte 28 in das Innere des Gehäusegrundteils 1, um die Verbindung zu dem Bildwandlerteil 12 und zu Batterieanschlüssen herzustellen.
Die Kontaktstifte 28 sind in der Wand des Schaltergehäuses 25 so eingelassen, dass der Innenraum des
Schaltergehäuses 25 gegenüber dem Innenraum des Gehäusegrundteils 1 gas- und wasserdicht abgeschlossen ist.

Ein in Fig. 4 dargestelltes separates Batteriegehäuse
ist ebenfalls im ersten Deckelteil 2 eingelassen, wie
aus Fig. 3 ersichtlich. Das Batteriegehäuse zur Aufnahme einer Batterie 30 ist ebenfalls gegenüber dem Innenraum des Gehäusegrundteils 1 hermetisch abgeschlossen.
Nach aussen ist es mit einem Batteriedeckel 31 verschliessbar, während nach innen führende Kontaktstifte
32 und 33 gas- und wasserdicht im Batteriegehäuse 29
eingelassen sind.

Schliesslich kann zur Ergänzung des Nachtsichtglas eine
Infrarotlampe 34 neben dem Objektivgehäuseteil 4 vorgesehen sein, wobei die Infrarotlampe mit ihrer Fassung im
Innern des Gehäusegrundteils 1 angeordnet ist und nach
aussen mit Hilfe eines Lampendeckglases 35 gas- und
wasserdicht abgeschlossen ist. Im bevorzugten Ausführungsbeispiel stehen die Lampenanschlüsse einerseits mit den
Kontaktstiften 32, 33 der Batterie in Verbindung, andererseits mit einem dafür vorgesehenen Kontakt am Schaltergehäuse 25. Mit Hilfe einer besonderen Position des
Schalters 26 lässt sich die Infrarotlampe 34 nach Wunsch
ein- oder ausschalten. Sie dient zur Beleuchtung der
näheren Umgebung, beispielsweise von Kartenmaterial.

Zur Halterung des Nachtsichtgerätes auf dem Kopf oder am
Helm eines Beobachters sind am ersten Deckelteil 2 sowie
am zweiten Deckelteil 3 Halterungen 36 angebracht, an die beispielsweise ein Halteband oder andere Verbindungselemente zur Anpassung an Kopf, Helm oder Stativ angebracht sind.

Patentansprüche

1. Binokulares Nachtsichtgerät mit mindestens einer Bildverstärkerröhre und mit Mitteln zur Anpassung des Okularabstandes an den Augenabstand, gekennzeichnet durch ein gasdicht abgeschlossenes Gehäuse (1, 4), mit im wesentlichen konstantem Volumen, wobei gasdicht abgeschlossene Durchführungen (22, 25) für Betätigungselemente (21, 27) mindestens zur Verstellung des Okularabstandes vorgesehen sind.

2. Binokulares Nachtsichtgerät nach Anspruch 1, dadurch gekennzeichnet, dass Führungs- und/oder Verstellglieder (19, 20) im Innern des Gehäuses (1) angeordnet sind.

3. Binokulares Nachtsichtgerät nach Anspruch 1, dadurch gekennzeichnet, dass das Gehäuse (1) im Bereich des linken bzw. rechten Okulareinblicks mit einem rechten und einem linken Okulardeckglas (9, 10) hermetisch abgeschlossen ist und dass die Objektivöffnung mit einem Objektivdeckglas (8) hermetisch abgeschlossen ist.

4. Binokulares Nachtsichtgerät nach Anspruch 1, dadurch gekennzeichnet, dass ein geschlossenes Schaltergehäuse (25) gas- und wasserdicht in das Gehäuse (1) eingelassen ist, wobei in das Schaltergehäuse (25) gas- und wasserdicht eingelassene Kontaktstifte (28) in das Innere des Gehäuses (1) führen.

5. Binokulares Nachtsichtgerät nach Anspruch 1, dadurch gekennzeichnet, dass ein geschlossenes Batteriegehäuse (29) gas- und wasserdicht in das Gehäuse (1) eingelassen ist, wobei Kontaktstifte (32, 33) gas- und wasserdicht durch das Batteriegehäuse (29) in das Innere des Gehäuses (1) geführt sind.

6. Binokulares Nachtsichtgerät nach Anspruch 1, dadurch gekennzeichnet, dass Mittel (13) zur Verstellung der Distanz zwischen einem im Objektivgehäuseteil (4) angeordneten Objektiv (11) und einem nachfolgenden Bildwandlerteil (12) vorgesehen sind.

7. Binokulares Nachtsichtgerät nach Anspruch 6, dadurch gekennzeichnet, dass eine Einstellvorrichtung (15) zur gemeinsamen Verstellung des Objektivs (11) und des Bildwandlerteils (12) gegenüber einem nachfolgenden Optikteil (16) zur Bildschärfeeinstellung vorgesehen ist.

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 205 894 (D. FILIPOVICH et al.) * Insgesamt * | 1-6 | G 02 B 23/12 G 02 B 23/16 |
| | --- | | |
| A | US-A-3 454 773 (H.W. BOETHVIS et al.) * Insgesamt * | 1,4-6 | |
| | --- | | |
| A | GB-A-1 411 718 (S.R. CAPSEY) * Ansprüche 1,2; Abbildung * | 1,7 | |
| | --- | | |
| A | GB-A-2 052 781 (HOYA CORP.) * Seite 1, Zeile 123 - Seite 2, Zeile 4; Abbildung 2 * | 1,2 | |
| | ----- | | |

|  | RECHERCHIERTE SACHGEBIETE (Int. Cl. 3) |
|---|---|
| | G 02 B 23/12 G 02 B 23/16 G 02 B 7/12 |

Der vorliegende Recherchenbericht wurde für alle Patentansprüche erstellt.

| Recherchenort DEN HAAG | Abschlußdatum der Recherche 26-08-1983 | Prüfer GRASSELLI P. |
|---|---|---|